# EUROPÄISCHE PATENTSCHRIFT

(11) **EP 2 389 891 B1**
(45) Veröffentlichungstag und Bekanntmachung des Hinweises auf die Patenterteilung: **29.04.2026**
(21) Anmeldenummer: 11167401.6
(22) Anmeldetag: 25.05.2011
(51) Int. Cl.: A61C 8/00

(54) **Analogimplantat**
Analogue implant
Implant analogique

(30) Priorität: 26.05.2010 DE 102010021601
(43) Veröffentlichungstag der Anmeldung: 30.11.2011
(73) Patentinhaber: Straumann Holding AG, 4002 Basel (CH)
(72) Erfinder: Herweg, Holger, 4052, Basel (CH); Mettlerr, Reto, 4052, Basel (CH)
(74) Vertreter: Modiano, Micaela Nadia

(56) Entgegenhaltungen:
- DE-A1- 102006 018 726
- US-A1- 2006 228 672
- US-A1- 2008 241 789
- US-A1- 2009 081 613

## Beschreibung

Die vorliegende Erfindung betrifft ein Analogimplantat, insbesondere ein Analogimplantat, das in ein CAD/CAM hergestelltes Dentalmodell zur Anpassung einer Dentalprothese eingesetzt werden kann.

Aus der US 2003/0162148 A1 ist ein Analogimplantat für die Anpassung von Dentalprothesen bekannt, das in ein Gipsmodell eingebettet werden kann. Für gewöhnlich wird zur Anpassung einer Dentalprothese nach der Einheilphase eine in einem Knochengewebe implantierte Dentalimplantatschraube ein Gipsmodell hergestellt, das die dentale Lage des Mundes des Patienten mit der Implantatschraube wiedergibt. Anschließend wird das Analogimplantat in eine im Gipsmodell geeignet ausgebildete Bohrung eingesetzt, worauf sodann der Techniker die Dentalprothese anpassen kann. Das aus der US 2003/0162148 A1 bekannte Analogimplantat ist insofern nachteilig, da es keine Informationen enthält, die es ermöglichen würden, das Analogimplantat in ein CAD/CAM hergestelltes Dentalmodell einzusetzen.

US 2006/0228672 Al beschreibt ein Dentalimplantat, das ein distales Ende umfasst, das eine obere Oberfläche umfasst, und ein proximales Ende, das eine Öffnung definiert. Eine Innenfläche des Dentalimplantats definiert einen inneren Hohlraum. Im inneren Hohlraum ist mindestens ein elastisch auslenkbarer Zinken angeordnet, der so ausgebildet ist, dass er lösbar in eine Nut eingreift, die in einer Bohrung eines Prothesenaufbaus ausgebildet ist.

DE 102006018726 A1 beschreibt ein Dentalimplantat mit einem in einen Kieferknochen einbringbaren Pfostenteil und mit einem diesem zugeordneten Aufbauteil, an dem ein Zahnersatzstück anbringbar ist. Der Aufbau soll es dem Zahntechniker erlauben, eine für die weitere Montage der Komponenten besonders günstige Orientierung zu wählen, und es dem Behandler gleichzeitig ermöglichen, ohne Verwendung von Hilfswerkzeugen (z. B. individueller Schlüssel) die Vorteile einer Indizierung wahrzunehmen.

US 2009/0081613 A1 offenbart ein Analogimplantat zur individuellen Herstellung von prothetischen Superstrukturen für Zahnimplantate. Das Analogimplantat kann direkt oder indirekt in ein Meistermodell über eine Modellhülse und einen Implantatkopf eingeführt werden.

Generell besteht das Problem im Stand der Technik, dass es gegenwärtig nur möglich ist, ein Dentalmodell mit einem Analogimplantat durch Abformen des Kiefers des Patienten mit einer entsprechenden Abformmasse und durch Einbetten eines Abformpfostens in der Abformmasse herzustellen. Der Abformpfosten ist unabdingbar, um das Analogimplantat im Dentalmodell korrekt zu positionieren. Es ist jedoch gegenwärtig nicht möglich, ein Dentalmodell mit einem Analogimplantat aus gescannten intraoralen Daten durch CAM/CAD Verfahren herzustellen.

Daher ist es eine Aufgabe der vorliegenden Erfindung ein Analogimplantat bereitzustellen, das die obigen Nachteile überwindet und das besonders geeignet ist, um eine Dentalprothese an einem CAD/CAM Dentalmodell außerhalb des Mundes des Patienten anzupassen.

Diese Aufgabe wird gemäß Anspruch 1 gelöst. Vorteilhafte Weiterbildungen der Erfindung sind in den Unteransprüchen angegeben.

Es folgt eine detaillierte Beschreibung der Erfindung anhand von bevorzugten, nicht einschränkenden Ausführungsformen der Erfindung, sowie den beigefügten Zeichnungen. Darin zeigen:
Fig. 1 eine Darstellung des Mundes eines Patienten, mit einem Scankörper, der an einer osseointegrierten Dentalimplantatschraube eingesetzt ist;
Fig. 2 eine Monitor-Bildschirmkopie eines CAD-Systems, das den Abdruck des Mundes des Patienten in einem bestimmten Zustand während des Entwurfes einer Dentalprothese zeigt;
Fig. 3 eine dreidimensionale Seitenansicht von zwei Abutments aus verschiedenen Materialien und einem Abutment mit der darauf aufgesetzten Dentalprothese;
Fig. 4 eine Draufsicht eines Dentalmodells mit einer darauf gesetzten Dentalprothese;
Fig. 5 eine dreidimensionale Ansicht eines Dentalmodells mit einem eingesetzten Weichgewebemodell um eine Bohrung herum, in welche ein Analogimplantat einsetzbar ist;
Fig. 6. eine dreidimensionale Ansicht eines Teils des Dentalmodells mit einem auf dem nicht sichtbaren Analogimplantat aufgesetzten Abutment, das aus dem Weichgewebe hinausragt und worauf die Dentalprothese aufgesetzt werden soll;
Fig. 7 eine dreidimensionale Seitenansicht eines mit CAM/CAD-Verfahrensweisen gefrästen oder sonst verarbeiteten Dentalmodells, die einen Anschnitt um das Analogimplantat herum in einer Querschnittsansicht zeigt;
Fig. 8a eine dreidimensionale Seitenansicht eines Analogimplantats, das nicht Teil der beanspruchten Erfindung ist;
Fig. 8b eine Seitenansicht des Analogimplantats der Fig. 8a in einer axial leicht gedrehten Stellung;
Fig. 8c eine schematische Ansicht eines in Bezug auf die Fig. 8b abgewandelten Analogimplantats;
Fig. 8d eine Ansicht von unten der Fig. 8c;
Fig. 9a eine perspektivische Ansicht einer Ausführungsform eines Analogimplantats gemäß der vorliegenden Erfindung;
Fig. 9b eine perspektivische Ansicht einer ersten erfindungsgemäßen Abwandlung des Analogimplantats der Fig. 9a;
Fig. 10a eine perspektivische Ansicht einer zweiten erfindungsgemäßen Abwandlung des Analogimplantats der Fig. 9a;
Fig. 10b eine seitliche Ansicht der zweiten erfindungsgemäßen Abwandlung der Fig. 10a;
Fig. 10c eine Schnittansicht der zweiten erfindungsgemäßen Abwandlung der Fig. 10a;
Fig. 10d eine Draufsicht der zweiten erfindungsgemäßen Abwandlung der Fig. 10a;
Fig. 11a eine perspektivische Ansicht einer dritten erfindungsgemäßen Abwandlung des Analogimplantats der Fig. 9a.
Fig. 11b eine seitliche Ansicht der dritten erfindungsgemäßen Abwandlung der Fig. 11a;
Fig. 11c eine Schnittansicht der dritten erfindungsgemäßen Abwandlung der Fig. 11a; und
Fig. 11d eine Draufsicht der dritten erfindungsgemäßen Abwandlung der Fig. 11a.

In der gegenwärtigen Beschreibung bezeichnet der Begriff "distal" einen Bereich, der weiter entfernt vom Dentalmodell liegt und der Begriff "proximal" einen Bereich, der näher am Dentalmodell liegt. Im Rahmen der Beschreibung ist "distal" gleichbedeutend mit "koronal" und "proximal" mit "apikal".

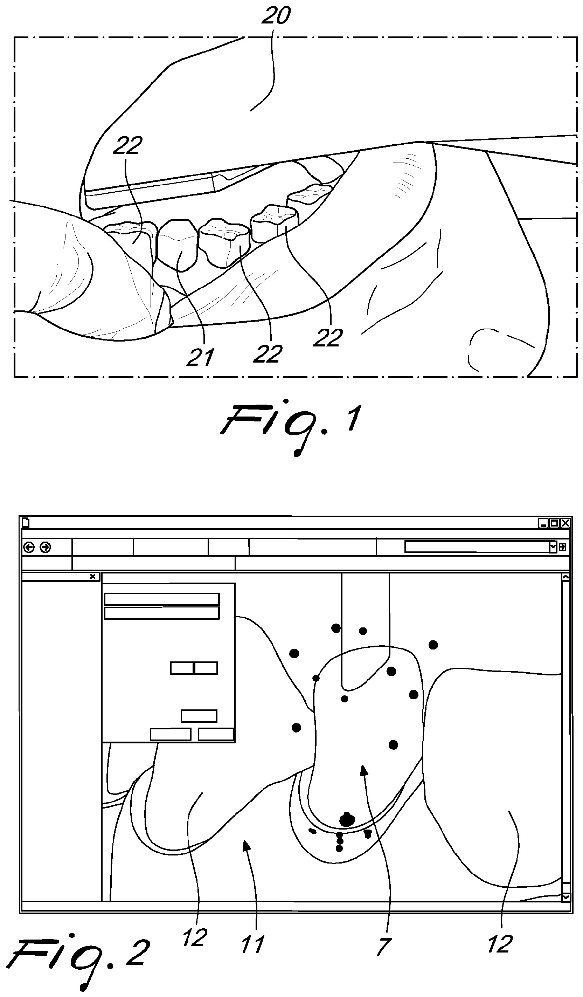

Unter Bezugnahme auf die Fig. 1 wird ein offener Mund eines Patienten nach der Osseointegration einer Dentalimplantatschraube mit einem verbundenen Scankörper 21 gezeigt. Der Scankörper 21 umfasst ein proximales Ende, das genau in das distale Ende der Dentalimplantatschraube passt. Darüber hinaus umfasst der Scankörper 21 ein distales Ende mit einer definierten scanbaren Oberfläche, die vorzugsweise polygonal ausgebildet ist und sich aus dem Weichgewebe erstreckt, um von einem Scanner 20 erfasst zu werden. Die Stellung und Richtung der Dentalimplantatschraube kann exakt aus den eingescannten Daten der Stellung und Richtung des distalen Teils des Scankörpers 21 bestimmt werden, und zwar auf eine Art und Weise, die dem Fachmann bekannt ist und hier nicht weiter erläutert werden soll. Während des Scanvorgangs befindet sich der Scanner 20 im Mund des Patienten und ist im Wesentlichen auf den Scankörper 21 gerichtet, kann aber auch die Nachbarbereiche des Scankörpers 21 abtasten, sodass auch die intakten Nachbarzähne 22 erfasst werden. Die Stellung und Richtung des Scankörpers 21 wird in Bezug zu den intakten Nachbarzähnen 22 als ein digitaler virtueller Abdruck dieses Teils des Mundes erfasst. Somit besteht eine gewisse Analogie zu einem herkömmlichen Abdruckverfahren, in welchem ein Gipsmodell des zu restaurierenden Dentalbereichs und seiner intakten Umgebung hergestellt wird. Es ist auch denkbar, den Scanner 20 über einen größeren Bereich des Mundes zu bewegen, um den kompletten Unter- oder Oberkiefer des Patienten zu erfassen und um somit ein vollständiges Bild des Patientenmundes zu erhalten. Es ist auch denkbar, mit dem Scanner 20 einzelne Bereiche des Patientenmundes zu erfassen und diese dann mittels bekannter Verfahren zusammenzusetzen. Mit den erfassten virtuellen Abdruckdaten kann somit ein digitales Dentalmodell erstellt werden, anhand dessen zu einem späteren Zeitpunkt das CAM/CAD Dentalmodell 10 mittels beispielsweise Fräsens hergestellt werden kann.

Fig. 2 zeigt eine Bildschirmkopie einer CAD-Software für den Entwurf einer Dentalprothese 7. Als erstes wird vorzugsweise ein virtueller Abdruck dargestellt, der in Übereinstimmung mit den virtuellen Abdruckdaten des gescannten Bereichs des Mundes des Patienten zeigt, mit den benachbarten intakten Zähnen 12 als Abdrücke der ursprünglichen benachbarten intakten Zähne 22, mit dem Weichgewebe 11 und mit einer berechneten Bohrung oder Blindbohrung des distalen Endes der Dentalimplantatschraube, die anhand der bekannten Geometrie des Scankörpers 21 berechnet wird. Auf Grund der virtuellen Abdruckdaten kann ein Prothesenaufbau mit einem Abutment 6 und einer Dentalprothese 7 entworfen werden.

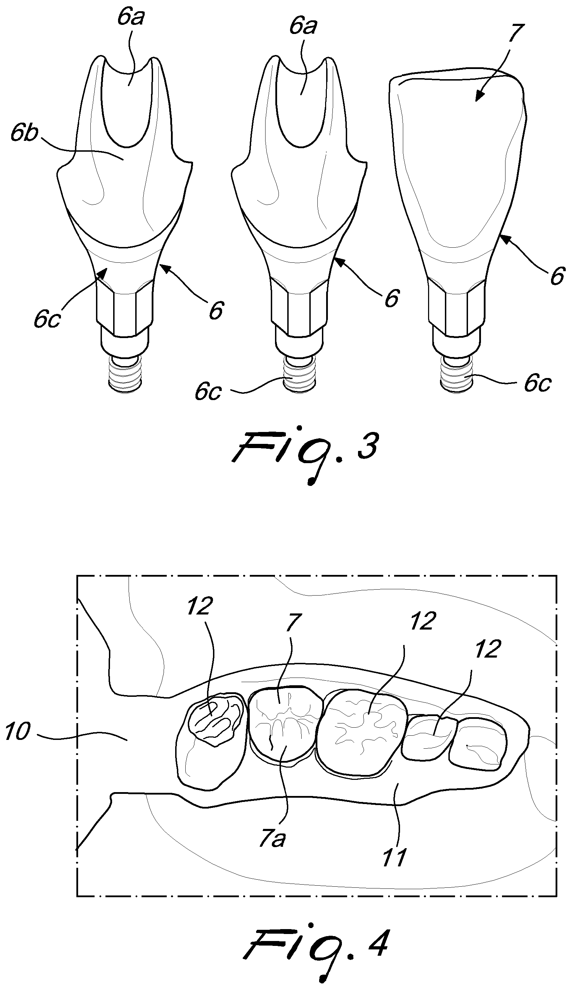

Das Abutment 6 kann entweder aus einer Reihe von fertigen Abutments ausgewählt werden oder als Einzelstück (customized Abutment) hergestellt werden. In der Fig. 3 werden mittig und links zwei Abutments 6 gezeigt, die aus verschiedenen Materialien (Keramik bzw. Titan) hergestellt sind und ein proximales Ende 6c umfassen, das mit dem distalen Ende der Dentalimplantatschraube verbindbar ist. Eine Verbindungsschraube, die am proximalen Ende 6c des Abutments 6 zu sehen ist, kann durch eine distale Öffnung 6a am distalen Ende 6b des Abutments in dieses eingeführt werden. Fig. 3 zeigt weiterhin rechts ein mit der Dentalprothese 7 verbundenes Abutment 6.

Fig. 4 zeigt einen Abschnitt eines mit CAM/CAD-Verfahren hergestellten Dentalmodells 10, dass anhand der virtuellen Abdruckdaten hergestellt wurde, wobei das Dentalmodell 10 eine Vielzahl von Abdrücken intakter Zähne 12 einschließt. In der Draufsicht der Fig. 4 ist ebenfalls die Dentalprothese 7 mit einer entsprechenden Kaufläche 7a zu ersehen. Das Bezugszeichen 11 bezeichnet den Verlauf des Weichgewebes am Dentalmodell 10.

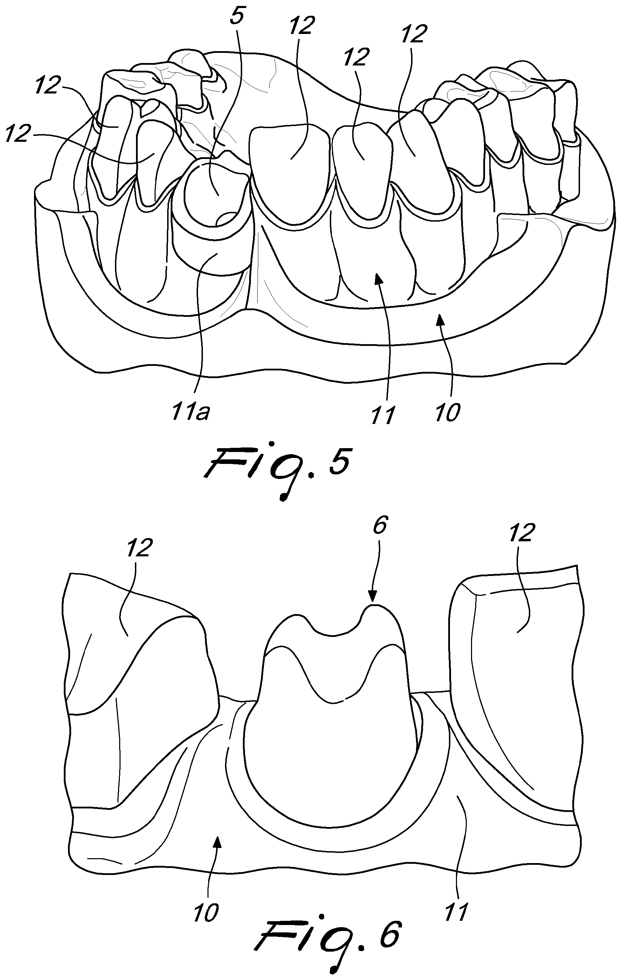

Fig. 5 zeigt das vollständige Dentalmodell 4, worin die gleichen Bezugszeichen wie in Fig. 4 verwendet werden. Wie in der Fig. 5 verdeutlicht, wird das Weichgewebe 11 zum Teil integral mit dem Dentalmodell 10 gefräst (oder durch gleichwertige Verfahren hergestellt). Ein Teil 11a des Weichgewebes 11 kann aber auch separat verarbeitet werden, um seine Herstellung zu erleichtern. Zusätzlich kann durch eine separate Verarbeitung des Teils 11a des Weichgewebes 11 die Genauigkeit an einer Verbindungsschnittstelle 5 des nachstehend beschriebenen Analogimplantats 1 mit einem Abutment erhöht werden.

Fig. 6 zeigt einen vergrößerten Abschnitt des Dentalmodells 10 mit den intakten Zähnen 12, dem Weichgewebe 11 und dem auf dem (nicht gezeigten) Analogimplantat aufgesetzten Abutment 6, wobei in dieser Ausführungsform das Weichgewebe 11 des Dentalmodells integral ausgebildet ist.

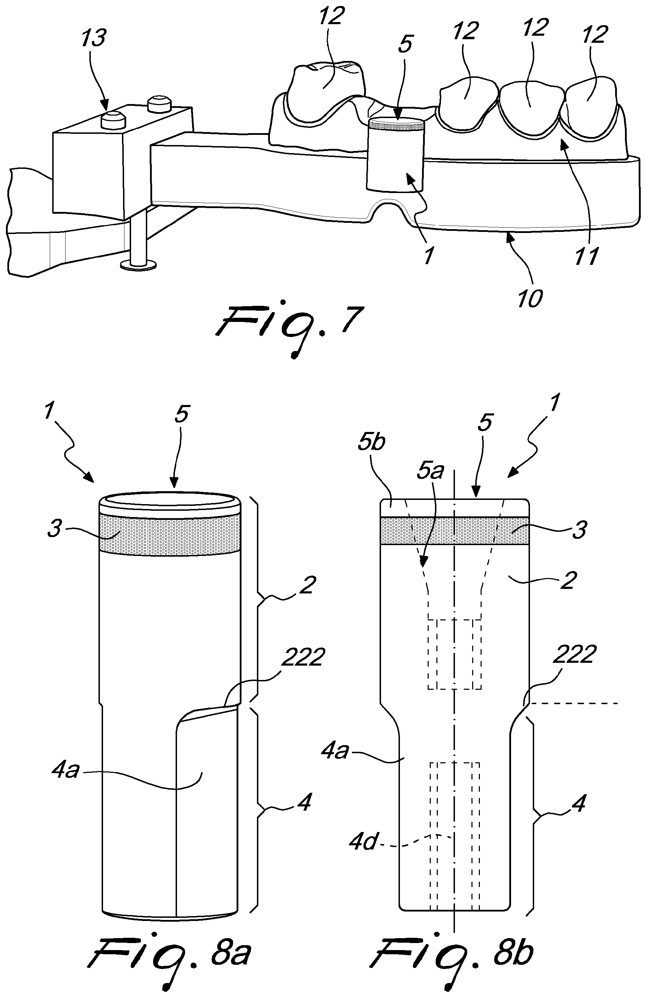

Unter Bezugnahme auf die Fig. 7 wird eine dreidimensionale Seitenansicht des mit CAM/CAD-Verfahrensweisen gefrästen oder sonst verarbeiteten Dentalmodells 10, die einen Anschnitt (in etwa dem Abschnitt der Fig. 4 entsprechend) um das Analogimplantat 5 herum in einer Querschnittsansicht zeigt. Das Dentalmodell 10 ist in dem gezeigten mittels einer Befestigungseinrichtung 13 mit einer Fräse verbunden.

Wie aus den Figuren 7, 8a und 8b ersichtlich, hat das erfindungsgemäße Analogimplantat 1 eine bestimmte asymmetrische Geometrie, was seine genaue Höhen-, Axial- und Winkelausrichtung in der Bohrung oder Blindbohrung des Dentalmodells gestattet. Die anhand der bekannten Geometrie des Scankörpers 21 berechnete Bohrung oder Blindbohrung spiegelt exakt die Höhen-, Axial- und Winkelausrichtung der Dentalimplantatschraube wider, so dass das erfindungsgemäße Analogimplantat 1 ebenfalls exakt der Ausrichtung der Dentalimplantatschraube folgt und somit eine präzise Anpassung der Dentalprothese 7 am Dentalmodell gestattet.

Das Analogimplantat 1 weist vorzugsweise, wie in den Figuren 8a und 8b gezeigt, einen im Wesentlichen zylindrischen distalen Abschnitt 2 mit der Verbindungsschnittstelle 5 zum Abutment 6 auf, die im Wesentlichen gleich ist mit der Verbindungsschnittstelle einer Dentalimplantatschraube. Darüber hinaus kann das Analogimplantat 1 an seiner Verbindungsschnittstelle 5 mit einer Vertiefung oder Blindbohrung 5a und einer Oberfläche 5b ausgestattet sein, um das Aufsetzen des Abutments 6 zu erleichtern. Ein Umfangseinschnitt 3 kann als weitere Positionierhilfe und/oder zur besseren Verbindung mit dem Abutment 6 bereitgestellt werden. Ein proximal gelegener Absatz 222 des distalen Abschnitts 2 stellt einen Höhenanschlag zur Verfügung, der eine genaue Positionierung des Analogimplantats 1 in der Höhe am Dentalmodell 10 bzw. Weichgewebe 11 des Dentalmodells 10 gestattet.

Der proximale Abschnitt 4 des Analogimplantats 1 ist nicht rundsymmetrisch und ausgebildet, um das Analogimplantat 1 in der Bohrung des Dentalmodells 10 in einer bestimmten Winkellage zu sichern. Weiterhin kann am Analogimplantat 1 eine Gewindebohrung 4d zur Sicherung am Dentalmodell bereitgestellt werden. Der proximale Abschnitt 4 ist erfindungsgemäß mit mindestens zwei abgeflachten Bereichen 4a ausgebildet, die durch das Abtragen von jeweiligen Teilen eines Zylinders erhalten werden und die drehsymmetrisch um die Achse des proximalen nicht rundsymmetrischen Abschnitts 4 gebildet sind, wodurch die axiale Sicherung des Analogimplantats 1 und seine Repositionierung in einer entsprechend ausgebildeten Bohrung oder Blindbohrung des Dentalmodells 10 möglich ist. Aufgrund der Geometrie des Analogimplantats 1 der nicht beanspruchten Ausführungsform der Fig. 8a bzw. 8b besteht der besondere Vorteil darin, dass dieses aus dem Dentalmodell 10 entnehmbar und in zwei Stellungen repositionierbar ist. Darüber hinaus ist es möglich, das Analogimplantat 1 am proximalen nicht rundsymmetrischen Abschnitt 4 zu verkürzen, so dass das Analogimplantat 1 entsprechend den Abmaßen des Dentalmodells 10 in seiner Länge anpassbar ist. Erfindungsgemäß ist es denkbar, die Anzahl der abgeflachten Bereiche 4a unter Beibehaltung der Drehsymmetrie, um die Achse des proximalen nicht rundsymmetrischen Abschnitts 4 zu erhöhen, um die Anzahl der Stellungen des Analogimplantats 1 im Dentalmodell 10 dementsprechend zu steigern. Selbstverständlich ist in diesem Fall die Formgebung der Bohrung bzw. der Blindbohrung des Dentalmodells 10 der erhöhten Anzahl an abgeflachten drehsymmetrischen Bereichen 4a anzupassen. Die externe Geometrie des proximalen Abschnitts 4 ist dergestalt, dass das Analogimplantat 1 aus dem Dentalmodell 10 entnehmbar ist.

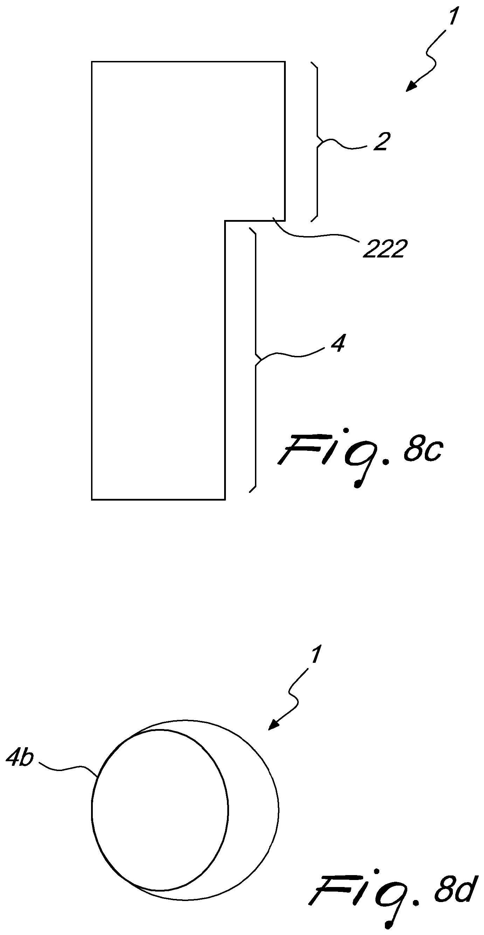

In der nicht beanspruchten Ausführungsform der Fig. 8c und 8d ist der proximale Abschnitt 4 erfindungsgemäß mit einem elliptischen Querschnitt 4b ausgebildet. Der distale Abschnitt 2 entspricht demjenigen der Ausführungsform der Fig. 8a und 8b und wird daher nicht näher erläutert. Die Ausführungsform der Fig. 8c und 8d bietet dieselben Vorteile wie diejenige der Fig. 8a und 8b, da ihre Geometrie ebenfalls eine Entnahme und eine axiale Anpassung der Länge des Analogimplantats 1 gestattet. Darüber hinaus ist das Analogimplantat 1 der Ausführungsform der Fig. 8c und 8d (wie jenes der Figuren 8a und 8b) in zwei Positionen in der Bohrung oder Blindbohrung des Dentalmodells 10 durch einen Dentaltechniker repositionierbar, wobei auch im Fall der Ausführungsform der Fig. 8c und 8d die Bohrung oder Blindbohrung des Dentalmodells 10 eine Form hat, die komplementär zur elliptischen Form des Abschnitts 4 ist. Die externe Geometrie des proximalen Abschnitts 4 ist auch in dieser Ausführungsform dergestalt, dass das Analogimplantat 1 aus dem Dentalmodell 10 entnehmbar ist.

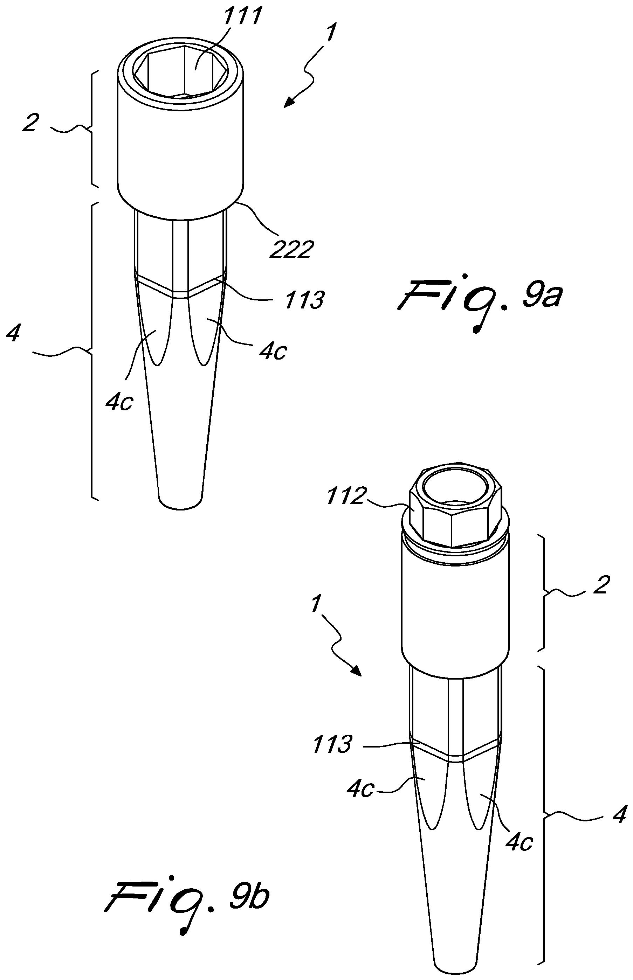

Fig. 9a zeigt eine erfindungsgemäße Ausführungsform eines Analogimplantats 1 mit einem ersten distal gelegenen Abschnitt 2 und einem zweiten proximal gelegenen Abschnitt 4. Der erste distal gelegene Abschnitt 2 ist vorzugsweise rundsymmetrisch und enthält wie üblich eine in der perspektivischen Ansicht nur zum Teil ersichtliche Blindbohrung oder Öffnung, die mit einem geeigneten Verbindungsprofil 111 zur drehsicheren Aufnahme eines (nicht gezeigten) Aufbauteils oder Abutments ausgestattet werden kann. Der zweite proximal gelegene Abschnitt 4 ist mit einem ersten vorzugsweise zylindrischen distalen Teil und einem zweiten vorzugsweise kegelförmigen proximalen Teil ausgestattet. Es ist jedoch erfindungsgemäß denkbar, den zweiten proximalen Abschnitt 4 in seiner Gesamtheit zylindrisch oder kegelförmig auszubilden. Jedenfalls ist erfindungsgemäß der zweite proximal gelegene Abschnitt 4 mit einer Vielzahl von abgeflachten Bereichen oder Einschnitten 4c ausgebildet, die seine drehsichere Positionierung und die Repositionierung in einem in der Fig. 9a nicht gezeigten Dentalmodell gestatten und die drehsymmetrisch um die Achse des zweiten proximalen Abschnitts 4 angeordnet sind. Vorzugsweise beträgt die Anzahl der abgeflachten Bereiche oder Einschnitte 4c vier und ihre Anordnung um die Achse des zweiten Abschnitts 4 ist drehsymmetrisch. Die Anzahl der abgeflachten Bereiche oder Einschnitte 4c kann jedoch auch andere Zahlenwerte, die größer als zwei sind, annehmen, unter Beibehaltung der Drehsymmetrie. Der proximal gelegene Absatz 222 des ersten distal gelegenen Abschnitts 2 des Analogimplantats 1 stellt einen Höhenanschlag zur Verfügung, der eine genaue Positionierung des Analogimplantats 1 in der Höhe am Dentalmodell 10 bzw. Weichgewebe 11 des Dentalmodells 10 gestattet. Die erfindungsgemäße Ausführungsform der Fig. 9a bietet dieselben Vorteile wie diejenige der Fig. 8c und 8d, da ihre Geometrie ebenfalls eine Entnahme, eine Repositionierung und eine axiale Anpassung der Länge des Analogimplantats 1 gestattet. Darüber hinaus wird die Repositionierbarkeit mit der Anzahl an abgeflachten Bereichen oder Einschnitten 4c angepasst. Selbstverständlich ist in diesem Fall die Formgebung der Bohrung bzw. der Blindbohrung des Dentalmodells 10 der erhöhten Anzahl an abgeflachten drehsymmetrischen Bereichen 4a anzupassen. Die externe Geometrie des proximalen Abschnitts 4 ist auch in dieser erfindungsgemäßen Ausführungsform dergestalt, dass das Analogimplantat 1 aus dem Dentalmodell 10 entnehmbar ist.

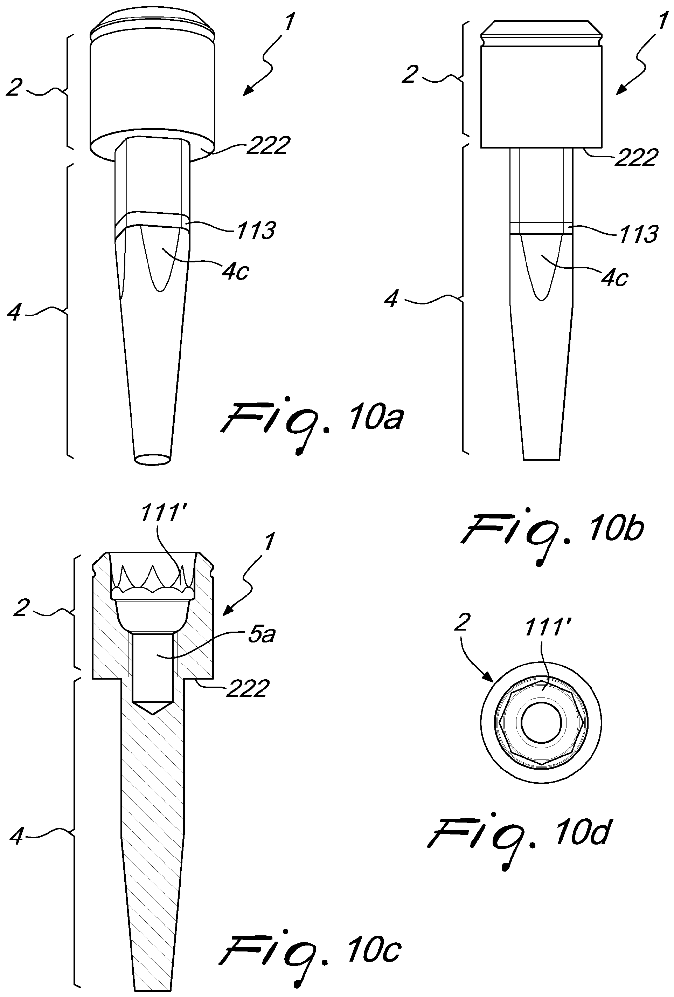

Die Fig. 9a zeigt eine beispielhafte Ausbildung des Verbindungsprofils 111, das als im Inneren der Blindbohrung im zylindrischen distalen Abschnitt 2 des Analogimplantats ausgebildet ist. Vorzugsweise ist das Verbindungsprofil 111 oktogonal, wobei das Oktagon zusätzlich zur dargestellten Form der Fig. 9a auch jene der synOcta^{®} Verbindung der Inhaberin der gegenwärtigen Anmeldung annehmen kann (siehe dazu Figur 10a bis 10d). Die externe Geometrie des Analogimplantats 1 mit den abgeflachten Bereichen oder Einschnitten 4c ist mit dem Verbindungsprofil kompatibel. Die Beziehung des Verbindungsprofils 111 ist mit den abgeflachten Bereichen oder Einschnitten 4c vorgegeben. Der zylindrische distale Abschnitt 2 kann verschiedene Abmessungen aufweisen, wie beispielsweise NN ("Narrow Neck"), RN ("Regular Neck"), WN ("Wide Neck"), RC ("Regular CrossFit^{™}"), NC ("Narrow CrossFit^{™}") und dergleichen, die von der Inhaberin der gegenwärtigen Anmeldung hergestellt und vertrieben werden.

In der ersten erfindungsgemäßen Abwandlung der Fig. 9b ist das Verbindungsprofil 112 als ein Mehrkant oberhalb des zylindrischen distalen Abschnitts 2 ausgebildet. Vorzugsweise ist der Mehrkant als ein Oktagon ausgebildet. Ansonsten unterscheidet sich diese Abwandlung von der Ausführungsform der Fig. 9a grundsätzlich nicht. In der ersten Abwandlung der Fig. 9b ist die Beziehung des Verbindungsprofils 112 mit den abgeflachten Bereichen oder Einschnitten 4c vorgegeben.

In der zweiten erfindungsgemäßen Abwandlung der Fig. 10a bis 10d ist das Verbindungsprofil 111' als synOcta^{®} Verbindung im zylindrischen distalen Abschnitts 2 des Analogimplantats 1 ausgebildet. Darüber hinaus ist die Blindbohrung 5a des Analogimplantats 1 in der Schnittansicht der Fig. 10c in voller Länge ersichtlich. Ansonsten unterscheidet sich diese zweite Abwandlung von der Ausführungsform der Fig. 9a grundsätzlich nicht und daher werden die einzelnen Komponenten dieser Abwandlung nicht weiter erläutert. In der zweiten Abwandlung der Fig. 10a bis 10d ist die Beziehung des Verbindungsprofils 111' mit den abgeflachten Bereichen oder Einschnitten 4c vorgegeben.

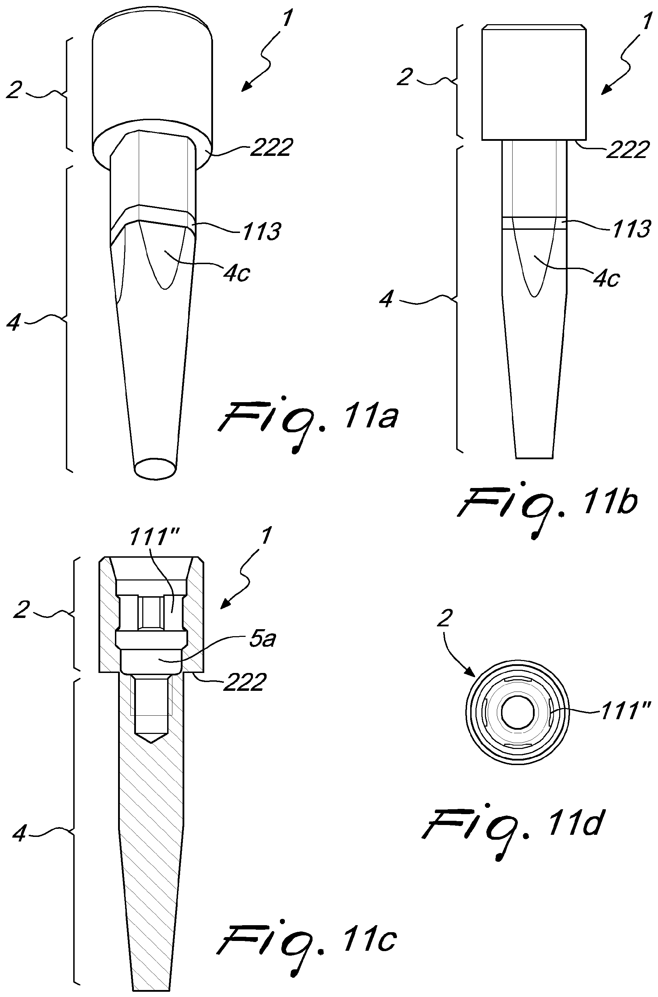

In der dritten erfindungsgemäßen Abwandlung der Fig. 11a bis 11d ist das Verbindungsprofil 111" als CrossFit^{™} Verbindung der Inhaberin der gegenwärtigen Anmeldung mit selbstführenden internen prothetischen Verbindungselementen im zylindrischen distalen Abschnitts 2 des Analogimplantats 1 ausgebildet. Darüber hinaus ist die Blindbohrung 5a des Analogimplantats 1 in der Schnittansicht der Fig. 11c in voller Länge ersichtlich. Ansonsten unterscheidet sich diese dritte Abwandlung von der Ausführungsform der Fig. 9a grundsätzlich nicht und daher werden die einzelnen Komponenten dieser Abwandlung nicht weiter erläutert. In der dritten Abwandlung der Fig. 11a bis 11d ist die Beziehung des Verbindungsprofils 111" mit den abgeflachten Bereichen oder Einschnitten 4c vorgegeben.

Alle beschriebenen Ausführungsformen des erfindungsgemäßen Analogimplantats 1 umfassen vorteilhaft eine Markierung am proximalen nicht rundsymmetrischen Abschnitt 4, die dem Dentaltechniker anzeigt, bis zu welcher Stelle, das Analogimplantat 1 verkürzbar ist, ohne seine Funktionalität zu verlieren. Anders ausgedrückt, zeigt die Markierung die maximal verkürzbare Länge des Analogimplantats 1, ohne dabei seine innere Blindbohrung zu beschädigen und/oder seine Rotationssicherung am Dentalmodell 10 zu beeinträchtigen. Somit kann das Analogimplantat 1 entsprechend den Abmaßen des Dentalmodells 10 in seiner Länge angepasst werden und seine Funktionalität wird nicht tangiert. Diese Markierung ist in den Figuren 9a, 9b, 10a, 10b, 11a und 11b mit dem Bezugszeichen 113 bezeichnet und kann vorteilhaft aus einer Lasermarkierung bestehen.

Die genaue Positionierbarkeit des erfindungsgemäßen Analogimplantats und die Möglichkeit seiner Repositionierung ist besonders vorteilhaft, wenn das Analogimplantat in einem Dentalmodell eingesetzt wird, das mittels CAM/CAD hergestellt wird, wobei das Dentalmodell anhand eines digitalen virtuellen Abdrucks des Mundes oder eines Teils des Mundes hergestellt wird. Darüber hinaus gestattet die Anpassbarkeit der Länge des erfindungsgemäßen Analogimplantats seine optimale Integration in einem Dentalmodell.

Wenn technische Merkmale in den Ansprüchen mit Bezugszeichen versehen sind, so sind diese Bezugszeichen lediglich zum besseren Verständnis der Ansprüche vorhanden und dementsprechend stellen solche Bezugszeichen keine Einschränkungen des Schutzumfangs solcher Elemente dar, die nur exemplarisch durch solche Bezugszeichen gekennzeichnet sind.

## Patentansprüche

1. Analogimplantat (1) für ein Dentalmodell (10), das eine Geometrie dergestalt aufweist, um seine Höhen-, Axial- und Winkelausrichtung in einer Bohrung oder Blindbohrung eines Dentalmodells (10) zu gestatten,
wobei das Analogimplantat (1) einen distalen Abschnitt (2) und einen proximalen Abschnitt (4) aufweist,
wobei der proximale Abschnitt (4) eine drehsymmetrische Geometrie in einem Querschnitt aufweist, der senkrecht zur Achse des proximalen Abschnitts liegt,
wobei die drehsymmetrische Geometrie ausgebildet ist, um die Rotationssicherung und Repositionierung des Analogimplantats (1) in einer Bohrung oder Blindbohrung eines Dentalmodells (10) zu gestatten,
wobei die externe Geometrie des proximalen Abschnitts (4) dergestalt ist, dass das Analogimplantat (1) aus dem Dentalmodell (10) entnehmbar ist, und
wobei ein proximal gelegener Absatz (222) des distalen Abschnitts (2) einen Höhenanschlag bildet, der eine genaue Positionierung des Analogimplantats (1) in der Höhe am Dentalmodell (10) bzw. am Weichgewebe (11) des Dentalmodells (10) gestattet,
wobei der proximale Abschnitt (4) mindestens zwei abgeflachte Bereiche oder Einschnitte (4c) aufweist; und
wobei der proximale Abschnitt (4) mit einem kegelförmigen proximalen Teil ausgestattet ist,
wobei der distale Abschnitt (2) des Analogimplantats (1) eine Blindbohrung oder Öffnung (5a) enthält, die mit einem geeigneten Verbindungsprofil (111; 111'; 111"; 112) zur drehsicheren Aufnahme eines Aufbauteils ausgestattet ist, wobei die Beziehung des Verbindungsprofils (111; 111'; 111"; 112) mit den abgeflachten Bereichen oder Einschnitten (4a; 4c) vorgegeben ist.

2. Analogimplantat (1) für ein Dentalmodell (10) nach Anspruch 1, wobei der distale Abschnitt (2) rundsymmetrisch ist.

3. Analogimplantat (1) für ein Dentalmodell (10) nach Anspruch 1 oder 2, wobei der proximale Abschnitt (4) weiterhin mit einem zylindrischen distalen Teil ausgestattet ist.

4. Analogimplantat (1) für ein Dentalmodell (10) nach einem oder mehreren der vorangehenden Ansprüche, wobei der proximale Anschnitt (4) vier abgeflachte Bereiche der Einschnitte (4c) umfasst, die drehsymmetrisch um die Achse des proximalen Abschnitts (4) angeordnet sind.

5. Analogimplantat (1) für ein Dentalmodell (10) nach einem oder mehreren der vorangehenden Ansprüche, wobei der proximale Abschnitt (4) des Analogimplantats (1) eine Markierung (113) umfasst, die anzeigt, bis zu welcher Stelle das Analogimplantat (1) verkürzbar ist, ohne seine Funktionalität zu verlieren.

6. Analogimplantat (1) für ein Dentalmodell (10) nach Anspruch 5, wobei die Markierung (113) eine Lasermarkierung ist.

7. Analogimplantat (1) für ein Dentalmodell (10) nach einem oder mehreren der vorangehenden Ansprüche, wobei die jeweiligen distalen Enden der abgeflachten Bereiche oder Einschnitte (4c) angrenzend zum proximal gelegenen Absatz (222) des distalen Abschnitts (2) angeordnet sind.

8. Kombination aus einem Analogimplantat (1) nach einem oder mehreren der vorangehenden Ansprüche und einem Dentalmodell (10), wobei das Dentalmodell (10) eine komplementär zum proximalen Abschnitt (4) des Analogimplantats (1) gebildete Bohrung oder Blindbohrung aufweist.

9. Kombination nach Anspruch 8, wobei das Dentalmodell (10) mittels CAM/CAD hergestellt wird.

10. Kombination nach Anspruch 8 oder 9, wobei das Dentalmodell (10) anhand eines digitalen virtuellen Abdrucks des Mundes oder eines Teils des Mundes hergestellt wird.

## Claims

1. Analog implant (1) for a dental model (10) which has a geometry of such a kind as to allow its height adjustment, axial and angular adjustment in a bore or blind hole of a dental model (10),
the analog implant (1) having a distal portion (2) and a proximal portion (4),
the proximal portion (4) having a rotationally symmetrical geometry in a cross-section which is perpendicular to the axis of the proximal portion,
the rotationally symmetrical geometry being adapted to allow securing against rotation and repositioning of the analog implant (1) in a bore or blind hole of a dental model (10),
the external geometry of the proximal portion (4) being such that the analog implant (1) can be removed from the dental model (10), and
a proximal overhang (222) of the distal portion (2) forming a vertical stopping point allowing precise positioning of the analog implant (1) in height on the dental model (10) or on the soft tissue (11) of the dental model (10), respectively;
the proximal portion (4) having at least two flattened regions or indentations (4c)
and the proximal portion (4) being provided with a conical proximal part;
the distal portion (2) of the analog implant (1) containing a blind hole or opening (5a) equipped with a suitable connection profile (111; 111'; 111"; 112) for receiving a component and securing it against rotation; the relation between the connection profile (111; 111'; 111"; 112) and the flattened regions or indentations (4a; 4c) being predefined.

2. Analog implant (1) for a dental model (10) according to Claim 1, the distal portion (2) being rotationally symmetric.

3. Analog implant (1) for a dental model (10) according to Claim 1 or 2, the proximal portion (4) being further provided with a cylindrical distal part.

4. Analog implant (1) for a dental model (10) according to one or more of the preceding Claims, the proximal portion (4) comprising four flattened regions of the indentations (4c) which are arranged rotationally symmetrically around the axis of the proximal portion (4).

5. Analog implant (1) for a dental model (10) according to one or more of the preceding Claims, the proximal portion (4) of the analog implant (1) comprising a marking (113) which indicates up to which point the analog implant (1) can be shortened without losing its functionality.

6. Analog implant (1) for a dental model (10) according to Claim 5, the marking (113) being a laser marking.

7. Analog implant (1) for a dental model (10) according to one or more of the above Claims, the respective distal ends of the flattened regions or indentations (4c) being arranged adjacent to the proximal overhang (222) of the distal portion (2).

8. Combination of an analog implant (1) according to one or more of the preceding Claims and a dental model (10), the dental model (10) having a bore or blind hole which is formed complementary to the proximal portion (4) of the analog implant (1).

9. Combination according to Claim 8, the dental model (10) being produced by means of CAM/CAD.

10. Combination according to Claim 8 or 9, the dental model (10) being produced using a digital virtual impression of the mouth or part of the mouth.

## Revendications

1. Implant analogique (1) pour un modèle dentaire (10), présentant une géométrie telle qu'il peut être orienté en hauteur, axialement et angulairement dans un alésage ou un alésage borgne d'un modèle dentaire (10),
l'implant analogique (1) comportant une partie distale (2) et une partie proximale (4),
la partie proximale (4) présentant une géométrie à symétrie de révolution dans une section transversale perpendiculaire à l'axe de la partie proximale,
la géométrie à symétrie de révolution étant conçue pour permettre le blocage en rotation et le repositionnement de l'implant analogique (1) dans un alésage ou un alésage borgne d'un modèle dentaire (10),
la géométrie externe de la partie proximale (4) étant telle que l'implant analogique (1) peut être retiré du modèle dentaire (10), et
un épaulement proximal (222) de la partie distale (2) forme une butée en hauteur qui permet un positionnement précis de l'implant analogique (1) en hauteur sur le modèle dentaire (10) ou sur les tissus mous (11) du modèle dentaire (10),
la partie proximale (4) présentant au moins deux zones aplaties ou incisions (4c) ;
et
la partie proximale (4) étant pourvue d'une partie proximale conique,
où la partie distale (2) de l'implant analogue (1) comportant un alésage borgne ou une ouverture (5a) qui est équipée d'un profil de connexion approprié (111 ; 111' ; 111" ; 112) pour recevoir de manière solidaire en rotation une partie de superposition, la relation entre le profil de connexion (111 ; 111' ; 111" ; 112) et les zones aplaties ou les incisions (4a ; 4c) étant prédéfinie.

2. Implant analogique (1) pour un modèle dentaire (10) selon la revendication 1, la partie distale (2) étant symétrique autour d'un axe.

3. Implant analogique (1) pour un modèle dentaire (10) selon la revendication 1 ou 2, la partie proximale (4) étant en outre équipée d'une partie distale cylindrique.

4. Implant analogique (1) pour un modèle dentaire (10) selon une ou plusieurs des revendications précédentes, où la partie proximale (4) comprend quatre zones aplaties des incisions (4c) qui sont disposées de manière symétrique en rotation autour de l'axe de la partie proximale (4).

5. Implant analogique (1) pour un modèle dentaire (10) selon une ou plusieurs des revendications précédentes, où la partie proximale (4) de l'implant analogique (1) comprend un marquage (113) qui indique jusqu'à quel point l'implant analogique (1) peut être raccourci sans perdre sa fonctionnalité.

6. Implant analogique (1) pour un modèle dentaire (10) selon la revendication 5, où le marquage (113) est un repère laser.

7. Implant analogique (1) pour un modèle dentaire (10) selon une ou plusieurs des revendications précédentes, où les extrémités distales respectives des zones aplaties ou des incisions (4c) étant disposées de manière adjacente à l'épaulement proximal (222) de la partie distale (2).

8. Combinaison d'un implant analogique (1) selon une ou plusieurs des revendications précédentes et d'un modèle dentaire (10), où le modèle dentaire (10) présentant un alésage ou un alésage borgne formé de manière complémentaire à la partie proximale (4) de l'implant analogique (1).

9. Combinaison selon la revendication 8, où le modèle dentaire (10) étant fabriqué au moyen d'un procédé CAM/CAD.

10. Combinaison selon la revendication 8 ou 9, où le modèle dentaire (10) étant fabriqué à partir d'une empreinte virtuelle numérique de la bouche ou d'une partie de la bouche.
